# EUROPEAN PATENT APPLICATION

(11) **EP 3 381 555 A1**
(43) Date of publication of application: **03.10.2018**
(21) Application number: 17163082.5
(22) Date of filing: 27.03.2017
(51) Int. Cl.: B01L 3/00, G01N 35/00, G01N 35/10, B01L 3/02

(54) **LIQUID HANDLING AND/OR DISTRIBUTING SYSTEM AND METHOD**

(71) Applicant: Technische Universität München, 80333 München (DE)
(72) Inventor: ROLLI, Claudio, 80333 München (DE); BAUSCH, Andreas, 85716 Unterschleißheim (DE); LIVNE, Ariel, 9311514 Jerusalem (IL)
(74) Representative: Hoefer & Partner Patentanwälte mbB

(57) **Abstract**

The present invention refers to a liquid handling and/or distributing system (1) and method, wherein the system (1) is configured in order to control the supply of at least one liquid (2-1, 2-2, 2-3) into a plurality of assigned liquid targets (21, 22, 23), comprises a channel assembly (60) having an upstream receiving section (61), a downstream distributing section (62) and a single and common connection channel (63) fluidly connecting said receiving section (61) and said distributing section (62), wherein said receiving section (61) is configured in order to receive said at least one liquid (2-1, 2-2, 2-3) into said single and common connection channel (63), wherein said distributing section (62) (I) comprises discharge channels (62-1, 62-2, 62-3) branching at their upstream end from said single and common connection channel (63), assigned in one-to-one correspondence to said liquid targets (21, 22, 23) and configured in order to be fluidly connected or connectable at their downstream end to an assigned liquid target (21, 22, 23) and (II) is configured in order to distribute said at least one liquid (2-1, 2-2, 2-3) from said single and common connection channel (63) into a liquid target (21, 22, 23) via a respective assigned discharge channel (62-1, 62-2, 62-3). The system (1) further comprises a discharge valve unit (42) having a respective discharge valve (42-1, 42-2, 42-3) located within a respective assigned discharge channel (62-1, 62-2, 62-3) for controllably and selectively opening and closing the passage of said respective assigned discharge channel (62-1, 62-2, 62-3).

## Description

The present invention refers to a liquid handling and/or distributing system and method in particular to systems and methods which are configured in order to controllably supply at least one liquid into a plurality of assigned liquid targets.

The project leading to this application has received funding from the European Search Council (ERC) under the European Union's Horizon 2020 research and innovation program (grant agree 737537).

When investigating in life sciences or within a medical or treatment environment the interaction and the influence of liquids and drugs or other components conveyed therewith with an underlying entity to be investigated, for instance a cell culture, a tissue or the like, a more or less rapid application and/or mixing of a fluid or liquid or a plurality thereof is a crucial point. This is in particular true when a certain degree of time resolution is necessary. For translating research results to medical or pharmaceutical applications it is also desired to better control parallel experiments with a high degree of reliability and control.

However, all these requirements lead to an increase of complexity of the equipment necessary for liquid handling and/or distributing.

The underlying object of the present invention is to provide systems and methods for liquid handling and/or distributing which allow management of the underlying processes with a high degree of reliability, flexibility and in an automated way.

The object underlying the present invention is achieved by a liquid handling and/or distributing system according to independent claim 1 and by a liquid handling and/or distributing method according to independent claim 14. Preferred embodiments are defined in the respective dependent claims

According to a first aspect of the present invention a liquid handling and/or distributing system is suggested. The liquid handling and/or distributing system according to the present invention is configured in order to control the supply of at least one liquid into a plurality of assigned liquid targets. The system therefore comprises a channel assembly having an upstream receiving section, a downstream distributing section and a single and common connection channel fluidly connecting said receiving section and said distributing section. The receiving section is configured in order to receive said at least one liquid into said single and common connection channel. The distributing section comprises discharge channels branching at their upstream end from said single and common connection channel, assigned in one-to-one correspondence to said liquid targets and configured in order to be fluidly connected or connectable at their downstream end to an assigned liquid target. The distributing section is further configured in order to distribute said at least one liquid from said single and common connection channel into a liquid target via a respective assigned discharge channel. In addition, the liquid handling and/or distributing system according to the present invention comprises a discharge valve unit having a respective discharge valve located within a respective assigned discharge channel for controllably and selectively opening and closing the passage of said respective assigned discharge channel.

Preferably, the liquid handling and/or distributing system is configured for allowing washing or flushing said single and common connection channel, e.g. with a neutral liquid such as water, buffer solution or the like in order to avoid contamination between different reagents. It is therefore a key aspect of the present invention to make use of a configuration wherein a plurality of discharge channels branch at their upstream side from a single and common connection channel, wherein control is taken over by an assignment of plural discharge valves of a discharge valve unit.

The receiving section and the distributing section may be configured as short as possible in order to reduce or even avoid a dead volume. Ideally, the receiving section and the distributing section may be designed such that the valve is directly connected to the single and common channel without any dead volume.

According to a preferred embodiment of the liquid handling and/or distributing system according to the present invention, said receiving section comprises supply channels joining at their downstream end into said connection channel, assigned in one-to-one correspondence to underlying liquid sources and configured in order to be fluidly connected or connectable at their upstream end to an assigned liquid source. Said receiving section is configured in order to receive said at least one liquid from a respective liquid source in a fluidly connected state.

Additionally or alternatively, the system according to the present invention may comprise a supply valve unit having a respective supply valve located within a respective assigned supply channel for controlled and selective opening and closing the passage of said respective assigned supply channel.

By these measures the supply of one or a plurality of liquids to be investigated or to be brought into contact with an entity to be investigated can be handled with a high degree of flexibility and reliability.

According to a further advantageous embodiment of the inventive system for handling and/or distributing one or a plurality of liquids a liquid source assembly may be comprised having one or plural liquid sources each of which being connected or configured to be connected or connectable to an assigned supply channel of the receiving section of the channel assembly.

Additionally or alternatively, a liquid target assembly may be provided and may have plural liquid targets each of which being connected or configured to be connected or connectable to an assigned discharge channel of the distributing section of the channel assembly.

According to the present invention and in particular by the capability of the liquid handling and/or distributing system to controllably and/or selectively open and close the passage of respective assigned discharge channels and/or supply channels it is for instance possible to mix a plurality of input liquids and to guide them to a single output, namely to a single liquid target.

In order to enforce the provided liquids at the right time in the desired amount through the system different measures can be taken.

In particular, for a respective liquid source there may be provided an assigned liquid drive and/or a coupling thereto.

The respective assigned liquid drive may preferably be configured in order to controllably and selectively drive the supply of a respective liquid from the assigned liquid source or a respective potential of drive, in particular a pressure on the respective liquid.

Under such circumstances, a respective liquid drive may be formed as a drive selected from the group which comprises a pneumatic drive, a hydraulic drive, a drive based on a stepper motor and a perfusor drive.

The control scheme and further aspects of ruling the operation of the liquid handling and/or distributing system according to the present invention may be enhanced by providing in the system a sensor assembly or a coupling thereto which comprises at least one supply-side sensor and/or at least one discharge-side sensor.

A respective supply-side and/or discharge-side sensor may be configured in order to detect at least one of the presence or absence of a liquid, the presence or absence of a flow of a liquid and a value of the velocity of flow of a liquid, in particular in a respective assigned supply channel or assigned discharge channel.

A supply-side sensor may in particular be configured in order to be attached or to be attachable to an output region of an assigned liquid source and/or to a respective assigned supply channel and/or a discharge-side sensor may be configured in order to be attached or to be attachable to an input region of an assigned liquid target and/or to a respective assigned discharge channel.

The system for handling and/or distributing liquids may comprise a determination and/or control unit and/or a connection thereto. Said determination and/or control unit may be configured in order to control an operation and/or a state of a respective liquid drive, a respective supply valve, a respective discharge valve, a respective supply-side sensor and/or a respective discharge-side sensor.

Optionally, these or other sensors may be used in order to monitor and/or to control the temperature or other processing parameters.

In addition or as an alternative, an interface and/or operation unit and/or a connection thereto may be provided. Said interface and/or operation unit may be configured in order to receive and/or to generate operation information, in particular obtained or initiated from or by a user and/or by using a man-machine interface, for influencing and/or ruling the control of an operation and/or of a state of a respective liquid drive, a respective supply valve, a respective discharge valve, a respective supply-side sensor and/or a respective discharge-side sensor.

Again, these or other sensors may be used in order to monitor and/or to control the temperature or other processing parameters.

Said determination and/or control unit, said interface and/or operation unit and/or said respective connections may be configured within or as a part of a mobile terminal device and/or for wired or wireless operation and/or data exchange.

A high degree of sensitivity for controlling the operation may be achieved when a respective supply valve and/or discharge valve is formed as a membrane valve comprising a flexible membrane mounted on and/or within a support and forming a closure of a pressure chamber within said support and in order to have in an unbiased and/or unpressurized rest state a first and in particular planar or curved configuration for not obstructing the passage of an assigned supply channel and/or discharge channel and to have in a biased and/or pressurized activation state a second and in particular curved or planar configuration obstructing the passage of the assigned supply channel and/or discharge channel.

One further issue underlying the present invention may be seen in finding a particular compact design for the system.

This may at least in part be achieved when the entirety of supply valves and/or the entirety of discharge valves are formed as individual membrane valves based on a single common and connected flexible membrane or several individual membranes mounted on and/or within a single common support - e.g. a harder chip - and forming individual closures of individual pressure chambers within said common support and in order to have locally and individually in an unbiased and/or unpressurized rest state a first and in particular planar configuration for not obstructing the passage of an assigned supply channel and/or discharge channel and to have locally and individually in a biased and/or pressurized activation state a second and in particular curved configuration obstructing the passage of the assigned supply channel and/or discharge channel.

Furtheron, the entirety of supply channels and/or the entirety of discharge channels may be formed on or within a single and common support, in particular formed as a plate and/or as a block.

A particular high degree of compacted location can be achieved when the entirety of supply channels and/or the entirety of discharge channels and the entirety of supply valves and/or the entirety of discharge valves are formed in and/or within a single and common support, in particular formed as a plate and/or as a block.

At least part of the liquid targets may be formed as an experimental site, in particular as a vessel for performing a biological or medical diagnostics experiment, in particular of a patch-or cell-clamp type, a drug response experiment, a cell transfection and/or cell labeling experiment, wherein a plurality of experimental sites is formed by liquid targets and is in particular formed on and/or within a common support or carrier, preferably in the form of a common multi-well and/or micro-fluidic chip or plate.

The present invention further relates to a liquid handling and/or distributing method which is characterized by the usage of the liquid handling and/or distributing system designed according to the present invention.

These and further details, advantages and features of the present invention will be described based on embodiments of the invention and by taking reference to the accompanying figures.
- Figure 1: shows a schematic block diagram for elucidating an embodiment of the liquid handling and/or distributing system according to the present invention.
- Figures 2 and 3: describe an open and a closed state of a valve formed as a membrane valve used in an embodiment of the liquid handling and/or distributing system according to the present invention.
- Figure 4: shows a schematic plan view of a single and common support forming a combined channel and valve assembly for an embodiment of the system for liquid handling and/or distributing.
- Figure 5: shows a schematic plan view of an alternative single and common support forming a combined channel and valve assembly for an embodiment of the system for liquid handling and/or distributing.
- Figure 6: shows a perspective side view of a further embodiment of the system for liquid handling and/or distributing.
- Figure 7: shows a schematic view of a further alternative single and common support forming a combined channel and valve assembly for an embodiment of the system for liquid handling and/or distributing.
- Figures 8 and 9: describe an open and a closed state of a valve formed as a membrane valve used in an embodiment of the liquid handling and/or distributing system according to the present invention.

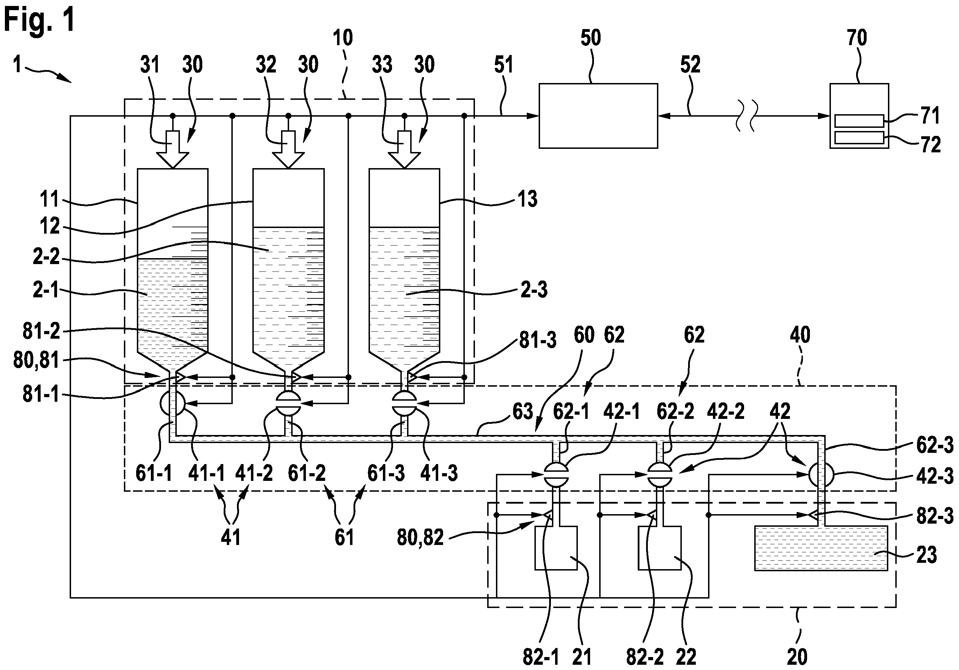

In the following embodiments and the technical background of the present invention are presented in detail by taking reference to accompanying figures 1 to 9. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention.

Figure 1 shows a schematic block diagram for elucidating an embodiment of the liquid handling and/or distributing system 1 according to the present invention.

The liquid handling and/or distributing system 1 as shown in figure 1 is in principle formed by a liquid source assembly 10 comprising first to third liquid sources or reservoirs 11, 12, 13, and a liquid target assembly 20 having first to third liquid targets 21,22, 23, wherein in this context the first and second liquid targets 21 and 22 may serve as first and second experimental chambers or vessels, whereas the third liquid target 23 may serve as a waste sink. Liquid source 11 may serve as a source of buffer solution, water or neutral liquid for washing or flushing.

The liquid sources 11, 12, 13 and the liquid targets 21, 22, 23 are fluidly connected by a combination of a valve assembly 40 and a channel assembly 60, wherein the latter establishes fluid connectivity and the former establishes its control.

The valve assembly 40 is formed by a supply valve unit 41 having first to third supply valves 41-1 to 41-3 and by a discharge valve unit 42 formed by first to third discharge valves 42-1 to 42-3.

The channel assembly 60 is formed by a receiving or supplying section 61 having first to third supply channels 61-1 to 61-3 and by a distributing or discharging section 62 formed by first to third discharge channels 62-2 to 62-3. As already indicated above, the receiving or supplying section 61 and the distributing or discharging section 62 may preferably be designed in order to reduce or even avoid dead volumes to thereby avoid cross-contamination.

A key aspect of the present invention is the fluid connection between the receiving or supplying section 61 and the distributing or discharging section 62 by means of a single and common connection channel 63 which preferably is a microfluidic channel.

First to third fluids 2-1 to 2-3 stored in the vessels underlying the first to third liquid sources 11 to 13, respectively, can be driven in a controlled manner by actuating the liquid drive assembly 30 having first to third liquid drives 31 to 33, e.g. with a one-to-one assignment to the first to third liquid sources 11 to 13, respectively.

The vessels of the liquid sources 11 to 13 join the single and common connection channel 63 of the channel assembly 60 by being connected with their lower and downstream ends to the first to third supply channels 61-1 to 61-3 having therebetween controllably connected the first to third supply valves 41-1 to 41-3 configured to have an open state not influencing the passage of the first to third supply channels 61-1 to 61-3 and a closed state in which said first to third supply channels 61-1 to 61-3 are obstructed and closed.

On the other hand the vessels of the liquid targets 21 to 23 join the single and common connection channel 63 of the channel assembly 60 by being connected with their upper and upstream portions to the first to third discharge channels 62-1 to 62-3 of the channel assembly 60 which can be controlled by obstructing and not obstructing the passages by means of the first to third discharge valves 42-1 to 42-3.

For monitoring and better controlling the operation of the system 1, a sensor assembly 80 is provided with a supply-side sensor unit 81 having first to third supply-site sensors 81-1 to 81-3 and with a discharge-side sensor unit 82 having first to third discharge-site sensors 82-1 to 82-3. Additionally or alternatively, a single flow sensor may be located within the common channel 63.

The sensors 81-1 to 82-3 are configured in order to obtain measurement values which might be descriptive for the presence/absence of a fluid or liquid, for the presence or absence of the flow of fluid or liquid and/or for the velocity of the flow of fluid or liquid. Detection of gas bubbles or other physical and/or chemical properties may be measurable by such sensors, too. The temperature may be monitored and/or controlled by using these or other sensors.

For the control operation, the sensors 81-1 to 82-3 as well as the valves 41-1 to 42-3 are connected or connectable by a control bus or determination and/or control line 51 to a control unit 50. External operation might be achieved by means of a connection 52 which might be a bus or a wireless connection to an interface and/or operating unit 70 having an operation portion 71 for receiving an operation input by the user as well as a display portion 72 for instance for displaying instructions or status data corresponding to the operation state of the system 1.

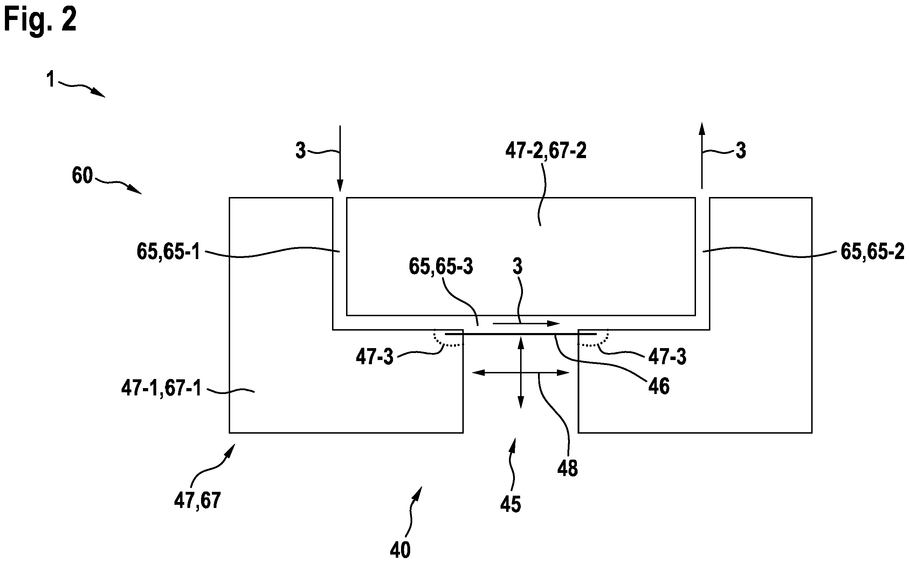

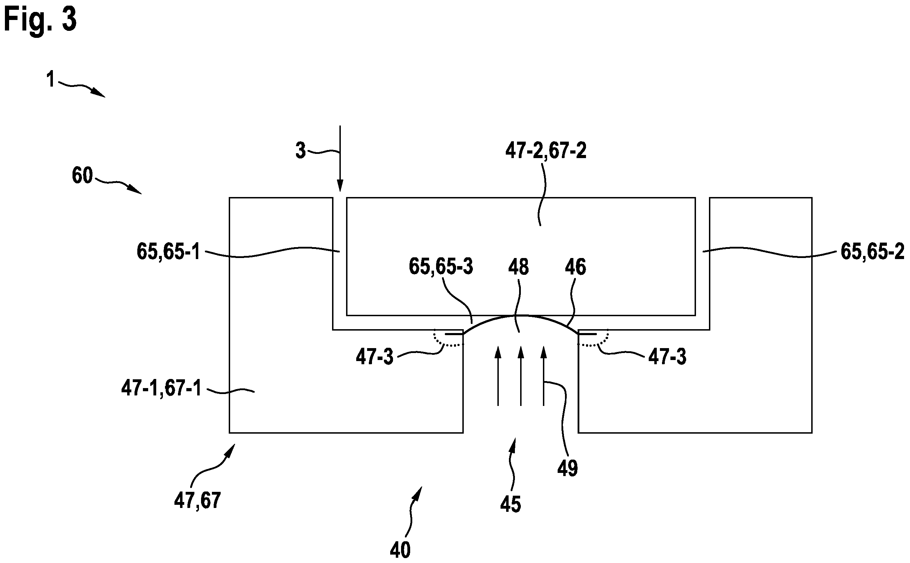

Figures 2 and 3 describe an open and a closed state, respectively, of a general valve 45 formed as a membrane valve used in an embodiment of the liquid handling and/or distributing system 1 according to the present invention.

Figures 2 and 3 in particular show a combination of the channel assembly 60 with a valve assembly 40 in a system 1 according to the present invention and based on a common support or carrier 47, 67 being subdivided into a first support portion 47-1, 67-1 and a second support portion 47-2, 67-2.

In the common support or carrier 47, 67, a general valve 45 is formed as a membrane valve having in an upper region of a pressure chamber 48 - the geometrical extension of which schematically indicated by the arrows - a closing or covering membrane 46 and is configured linearly over the entire aperture of the pressure chamber 48 and clamped or bonded within the support regions or areas 47-3 of the support or carrier 47. In figures 2 and 3, above the pressure chamber 48 and between first and second support portions 47-1, 67-1 and 47-2, 67-2, respectively, a general channel 65 is formed therebetween having a first or upstream portion 65-1 and a downstream portion 65-2 with an intermediate portion 65-3 right above the membrane 46.

In some embodiments, a thin membrane 46 may be located in the same plane as the support regions or areas 47-3 or on top of it, and preferably not below.

In the situation shown in figure 2 the pressure chamber 48 is unpressurized, i.e. the membrane 46 is unbiased and in a state of rest and essentially planar configuration, the free flow 3 of the fluid within the entire channel 65 is enabled.

In the situation shown in figure 3 the pressure chamber 48 receives an actuation force/pressure 49 thereby biasing the elastic and/or deformable membrane 46 which gets into a curved configuration thereby obstructing the passage of the intermediate portion 65-3 of the channel 65 between its first and second portions 65-1 and 65-2. The flow 3 of the fluid or liquid is disabled/stopped.

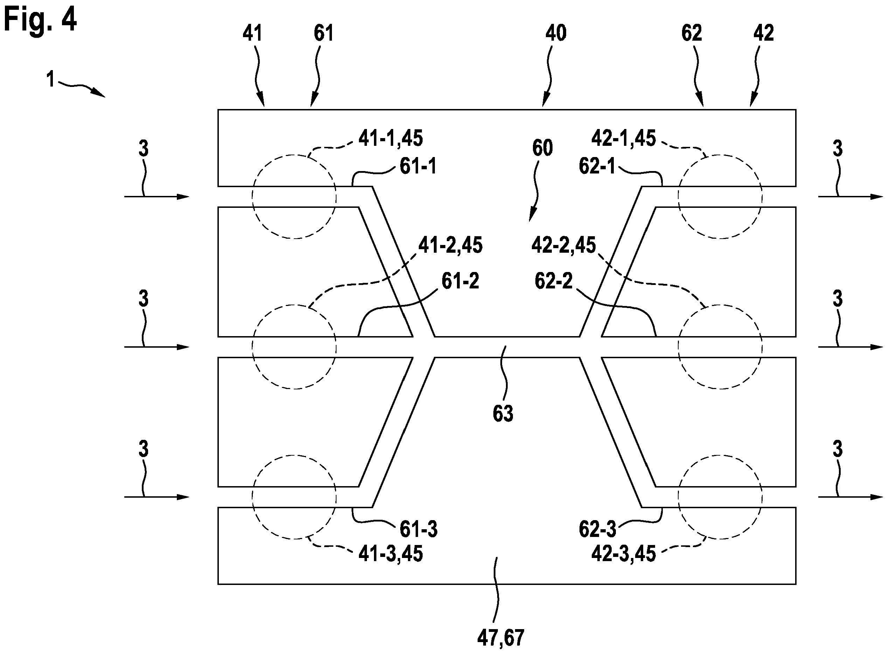

Figure 4 shows a schematic plan view of an embodiment of the system 1 for handling and/or distributing liquids according to the present invention having a single and common support 47, 67 forming a combined channel assembly 60 and valve assembly 40.

The common support 47, 67 may be formed as a microfluidic plate or block having an internal channel system with a receiving or supplying section 61 with first to third supply channels 61-1 to 61-3 and with a distributing or discharging section 62 having first to third discharge channels 62-1 to 62-3.

In addition, the common support 47, 67 forms for the valve assembly 40 the supply valve unit 41 with first to third supply valves 41-1 to 41-3 and the discharge valve unit 42 with first to third discharge valves 42-1 to 42-3. All the valves may be formed as valves 45 as shown in figures 2 and 3 and they may be operable in order to control the flow 3 of any of the liquids 2-1 to 2-3.

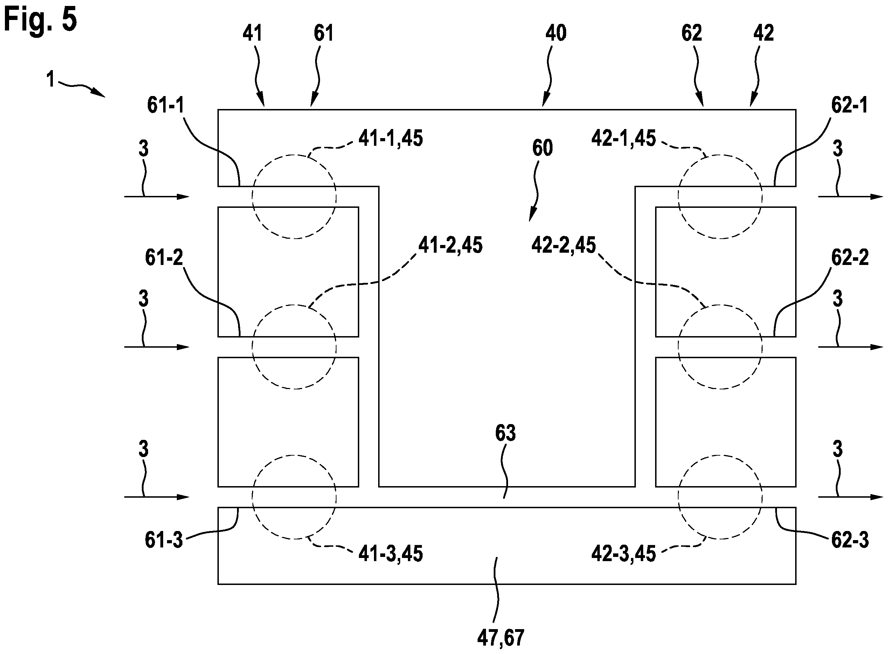

Figure 5 shows a schematic plan view of an alternative single and common support forming a combined channel and valve assembly for an embodiment of the system 1 for liquid handling and/or distributing.

This embodiment is in particular configured for allowing a thorough flushing or washing of the single and common connection channel 63, e.g. with neutral media.

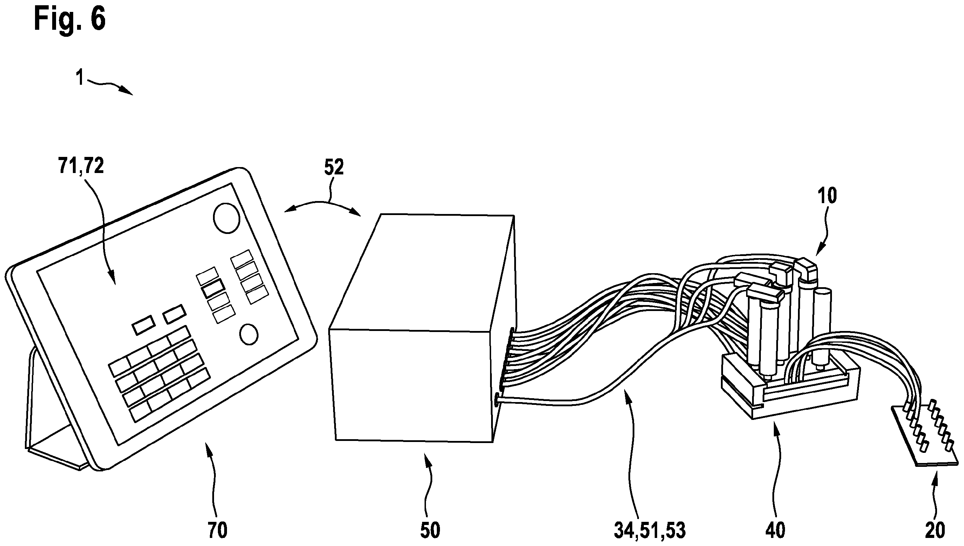

Figure 6 shows a perspective side view of a further embodiment of the system 1 for liquid handling and/or distributing. The interface and/or operation unit 70 having an operation portion 71 and a display portion 72 is formed by a mobile device having touch panel capabilities. The first control line 52 is formed by wireless means. The control unit 50 is connected to the liquid source assembly 10 by means of pressure lines 34 and 51 and by means of a second determination and/or control line or bus 53. The liquid source assembly 10 is connected by means of a valve assembly 42 (not shown) and further liquid lines to the liquid target assembly 20.

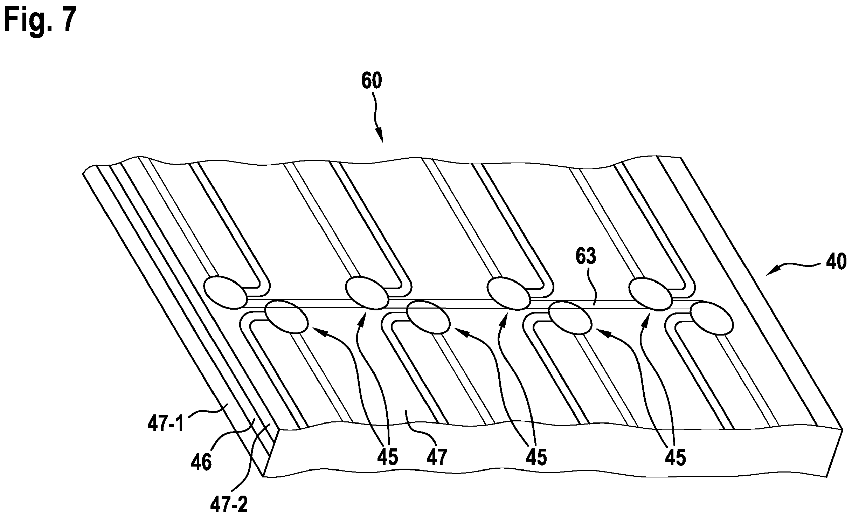

Figures 7 schematically shows a three-layered plastic chip forming a support carrier 47 for a valve assembly 40 having a lower plastic chip serving as a first support region 47-1, an upper plastic chip forming a second support portion 47-2 and a plastic membrane 46 attached therebetween.

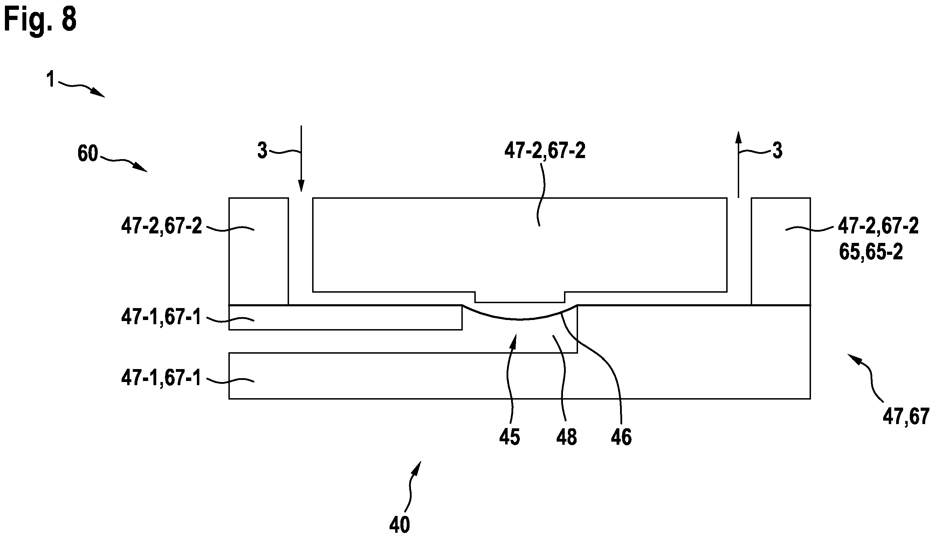

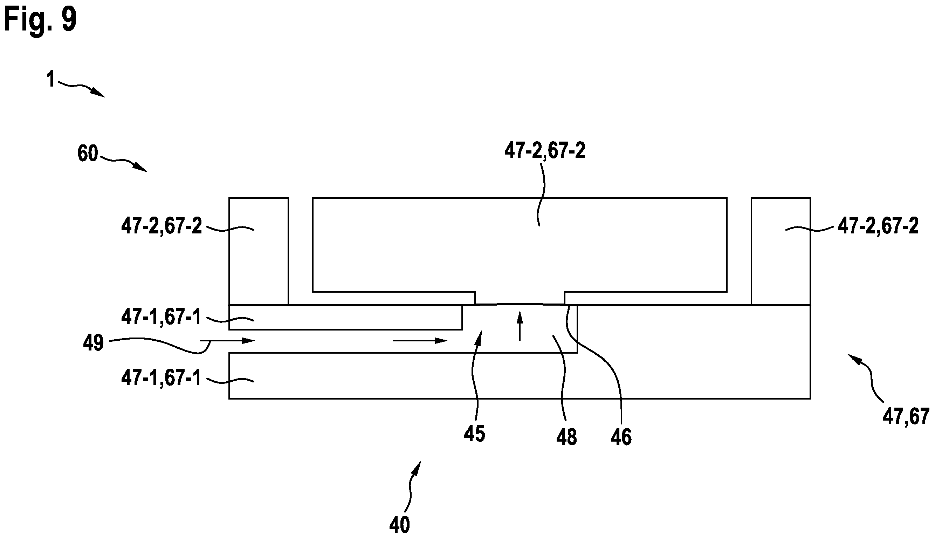

In a similar manner as figures 2 and 3, figures 8 and 9 show an open and a closed state of a valve 45 formed as a membrane valve 46 used in another embodiment of the liquid handling and/or distributing system 1 according to the present invention. In contrast to the embodiment shown in figures 2 and 3 the open state of the valve 45 shown in figure 8 is formed by a curved membrane 46 and an unpressurized state of the valve 45, whereas the closed state of the valve 45 shown in figure 9 is realized by a planar membrane 46 in a pressurized state of the valve 45. In this embodiment, the membrane 46 is located in the same plane as the support regions or areas 47-3 and on top of it.

These and further aspects of the present invention will also be described in detail in the following:

The present invention inter alia concerns a compact device for automated liquid handling.

Such devices are involved in laboratory automation for life science applications and medical diagnostics and other fields.

The invention attempts to solve the problem of how to automatically change liquids in a plurality of reaction chambers in a reliable and less time-consuming manner.

The present invention allows for distributing and diluting liquids from a variety of internal reservoirs into one or more reaction chambers in an automated fashion. Therefore, the invention is a promising tool that will fundamentally change the working routines, currently carried out in laboratories that are typically based on manual pipetting.

Today, liquids are typically handled in a laboratory with one of the following facilities:

### Manual pipette

Advantages: Pipettes are light, mobile, and have a wide application range. Typically, aqueous liquids can be transferred by hand from one reservoir to another with volumes of less the one microliter up to more than one milliliter with one step. This allows for a stepwise distributing, mixing and diluting of different liquids. Pipettes are suitable for carrying out experiments and tests in the life science research and biomedical diagnostics.

Disadvantages: In manual pipetting, each pipetting step is carried out by hand. It is therefore not only labor intensive, but also prone to errors as the operating person is responsible for the correct handling of the pipette, transferring liquids from the correct reservoirs of origin to the correct reservoirs of destination. In case that timing is important, this can be an extra challenge, either for fast protocols (adding different liquids within a few seconds or milliseconds) or very slow protocols where liquids need to be handled over the time course of several hours to days, possibly even conflicting with the regular working hours of the person running the protocol. As every step is carried out by the user by hand, also lack of reproducibility between repetitions of one experiment by one user becomes an issue, as well as transferring one protocol from one user to another. Another disadvantage of manual pipetting becomes apparent when the access is limited to the reservoirs where the liquid needs to be transferred. This is for example the case when working with samples mounted on a microscope where manual interaction becomes impossible without disturbing the experiment.

### Pipetting robot

Pipetting robots carry out the stepwise aspiration and dispensing process, normally done by manual pipetting. Although they allow for running automatically controlled liquid dispensing and mixing routines these machines are typically stationary and by far not as flexible in their applications compared to the manual pipette. Pipetting robots are typically designed and used for larger throughput experiments and screenings. They are not part of the researchers' or technicians' personal equipment as it is the case for manual pipettes and they are typically used by more than one person in the lab.

### Syringe pumps and perfusion systems

Syringe pumps and perfusion systems are used to dispense liquids, stored in a reservoir (syringe), into the vessel where the experiment takes place. They are used to continuously dispense typically one or two liquids or to dispense them at programmed time-points. Although they are possibly controlled in an automated way, they are not suited for multiplexing and mixing various liquids into several experimental compartments in parallel.

### Pressure controllers

Companies, specialized in equipment for microfluidics make and sell products (hardware and control software) on the market that allow for precisely controlling gas pressure to drive and manipulate liquids.

In microfluidic experiments, typically a set of different pumps, controllers and sensors are controlled through a computer interface while the user's microfluidic design is connected through several tubes. Although being able to meet a large multitude of different demands in the field of microfluidics due to their modular setup, these pressure controlling systems are stationary, with a large footprint and come without any precalibrated dispensing routines.

### Integrated liquid handling devices for in vitro experiments

In recent years first products were launched on the market that take advantage of integrated microfluidic designs in combination with designated controlling hardware and software to control liquid handling routines as being typically performed in the field of cell biology and microbiology, also in combination with microscopy. These systems are designed for carrying out designated in vitro experiments with cells or bacteria in an automated fashion. The experiments can be thereby monitored with microscope.

The present invention inter alia suggests a device in order to dispense and to distribute a number of different liquids to a number of different experiments, that are run in parallel and consist of a microfluidic approach, where the liquids are guided through a network of micro channels and valves to their respective experiment chambers.

The system 1 as mentioned above can also run experiments in parallel, e.g. four experiments. An aspect of the unique approach according to the present invention is to separate the liquid handling from the experiment chambers.

The principle underlying the present invention is shown in figure 1.

Input reservoirs are filled with different liquids, e.g. a washing solution and one or plural liquids, e.g. for carrying out different experiments. All reservoirs are connected to a common microfluidic channel through a valve. At the output end of the microfluidic channel, a waste reservoir for the washing solution is connected through a valve, as well as exits to the experiments. As the reservoirs filled with liquids are pressurized, a controlled opening of at least one valve on the input side together with at least one opening on the output side leads to a flow of liquid into an experiment chamber or the waste.

The following aspects are important for the present invention, either when taken alone or in an arbitrary combination:
1. Base unit with electronics contains the following functional parts:
   a. Two or more solenoid valves, typically the number of 9 or more valves is used.
   b. Constant pressure reducer, configured in order to reduce the input pressure to 240 mbar.
   c. Dynamic and electronically adjustable pressure reducer, configured in order to gradually adjust gas pressure between 0 mbar and the maximum pressure of the system.
   d. Battery for mobile power supply or optionally power plug.
   e. On board gas pump, pressure supply or optionally pressure supply through external pump.
   f. Electronic circuit with microcontroller, wireless antenna, Bluetooth, WLAN, driver to control solenoid valves and adjustable pressure reducer, status LED, touch screen.
2. Adapter which holds the fluidic chip to which the liquid reservoirs 11, 12, 13 are attached:
   a. The adapter is connected to the base unit through pressure tubes.
   b. The adapter is made from a hard material, either plastic or aluminum and includes a mechanical clamping system which allows for attaching and sealing the fluidic chip.
3. Fluidic chip including liquid reservoirs 11, 12, 13:
   a. Two or more liquid reservoirs 11, 12, 13 which may contain the different liquids that are used during each experiment. Liquids 2-1, 2-2, 2-3 are loaded by the user. The top of the reservoirs 11, 12, 13 is sealed with plugs that are connected to gas pressure, typically less than 200 mbar, which is applied to the liquids 2-1, 2-2, 2-3 in order to push them into the microfluidic system 1.
   b. Two or more exit channels 62-1, 62-2, 62-3 which are connected with experimental chambers 21, 22, 23.
   c. Microfluidic channel system 60 and valves 41-1 to 42-3 that allow for liquid multiplexing.
   d. Elastic membrane 46 fulfilling two main functions:
      i. Closing and sealing of the microfluidic channel structures 60 which are engraved into the plastic chip 47, 67.
      ii. With locally applied pneumatic pressure (typically 200 mbar) the membrane 46 can be pushed against the plastic chip 47, 67 to prevent liquid 2-1, 2-2, 2-3 flow through the micro channels 61-1 to 62-3 and 63. When gas pressure is released, pressurized liquids deform the membrane and a controlled liquid flow 3 through the micro channels 61-1 to 62-3 and 63 is facilitated.
      iii. Optical control.
   e. The membrane 46 has to be flexible and impermeable to pressurized gas and a thickness of 0,2 mm to 0,3 mm. An elastic silicone membrane 46 (250 µm thickness) is combined with an air-impermeable PVDC foil of 10 µm to 20 µm thickness.
      This is one possibility. Otherwise the membrane 46 can be also made out of a cyclic-olefin-copolymer (COC) which is bonded between two COC chips like a sandwich as described.
      A thin plastic membrane can be bonded between two thicker plastic chips in order to form one closed unit: This chip contains on one side of the membrane the microfluidic channel structures for the liquid flow and on the other side of the membrane the pneumatic supply for the valves. The membrane 46 itself serves both as a separation between the liquid and pneumatic channels and as a valve.
   f. The plastic chips 47, 67 together with the membrane 46 are clamped together and connected to pneumatic gas air pressure (valves) through an adaptor made from a hard material with a clamping system (spring or magnet).
   g. The plastic chip 47, 67 is preferentially made from a transparent material to allow an optical control by the user in order to make sure that no gas bubbles are trapped and/or that channels are not leaking.
   h. A tube from the base unit, connected to plugs allows for pressurizing the liquid reservoirs 11, 12, 13. The flow rate of the dispensed liquid 2-1, 2-2, 2-3 is controlled through this applied pressure.
   i. The fluidic chip is designed to be a single use part to guarantee sterile experiment conditions.
4. Tablet/PC with control software
   a. Wireless communication to a microcontroller 50, 70 to remotely run experiments and monitor their status.
   b. Liquid handling routines can be saved, loaded, adjusted.
   c. Conducted experiments can be logged for user documentation.
   d. Running experiments can be monitored and adjusted in a remote way, e.g. through the internet.
5. Experiment chambers 21, 22, 23 are connected through tubes to the fluidic chip 47, 67 and can be one of the following:
   a. Commercially available micro channels for cell culture.
   b. Fluidic chips that mimic three-dimensional cell culture conditions for organ-on-a-chip applications.
   c. Custom made flow channels.
6. Flow rates can be measured at the individual exits of the plastic chip, at the exits of the connected experiment chambers or inside the fluidic chip itself to control the experiments and give feedback. Thus according sensors 81-1 to 82-3 may be used.
7. Chip temperature can be monitored and adjusted.
8. Additional sensors can be integrated on or next to the chip for online diagnostics or analytics.

According to the present invention, one or plural of the following advantages may be achieved:
1. Automated cell culture treatment
   a. Cell labeling (immunostaining): Sequential exchange of different solutions with which biological samples, e.g. cells, are fixed and designated molecules/proteins are labeled with a fluorophore. This can take place inside an incubator or on a laboratory bench.
   b. Cell transfection: Living cells are sequentially incubated with transfection reagents and the transfection efficiency can be monitored on a microscope. This can take place inside an incubator, on a laboratory bench, or on a microscope.
   c. Dynamic cell treatment (drug response): Living cells are sequentially incubated with different drugs inside an incubator and their response is optionally monitored with a microscope.
   d. Physiological cell stimuli (patch-clamp): Cells are exposed to different drugs with their membrane potential measured through micro electrodes and monitored through a microscope.
2. Liquid multiplexing and mixing in parallel, e.g. in other than cell culture applications
   a. Diagnostic applications (e.g. enzyme-linked immunosorbent assay: ELISA).
   b. Other life science related assays (e.g. for synthetic biology, biochemistry or other assays).
3. Increased reproducibility compared to manual pipetting through documented experiment parameters.
4. Introducing automation in an area that is dominated by liquid handling performed through manual pipetting.
5. Small footprint allows a user experience that is personal and highly flexible/adaptive similar to the one of manual pipetting, however with advantages achieved by automation, e.g. increased reproducibility, saving resources, new opportunities for planning experiments.
6. As the user interaction with the instrument itself is reduced to only the initial setup time instead the whole duration of the experiment, it can be used in safety sensitive environments and applications (e.g. Ebola diagnostics, diagnostics involving radioactive markers).
7. Liquid mixing for multi-step processes enables controlling chemical reactions which can be carried out in parallel (batch reactions).
8. Saving reagent volumes by working in a microfluidic system.

In addition to the foregoing description of the present invention, for an additional disclosure explicit reference is taken to graphic representation of figures 1 to 9.

### List of reference signs

- 1: liquid handling and/or distributing system
- 2-1: (first) liquid
- 2-2: (second) liquid
- 2-3: (third) liquid
- 3: liquid flow

- 10: liquid source assembly
- 11: (first) liquid source or reservoir
- 12: (second) liquid source or reservoir
- 13: (third) liquid source or reservoir

- 20: liquid target assembly
- 21: (first) liquid target, (first) experimental chamber/vessel
- 22: (second) liquid target, (second) experimental chamber/vessel
- 23: (third) liquid target, waste

- 30: liquid drive assembly
- 31: (first) liquid drive
- 32: (second) liquid drive
- 33: (third) liquid drive
- 34: pressure line

- 40: valve assembly
- 41: supply valve unit
- 41-1: (first) supply valve
- 41-2: (second) supply valve
- 41-3: (third) supply valve
- 42: discharge valve unit
- 42-1: (first) discharge valve
- 42-2: (second) discharge valve
- 42-3: (third) discharge valve
- 45: valve
- 46: membrane
- 47: support, carrier
- 47-1: first support portion
- 47-2: second support portion
- 47-3: support region or area
- 48: pressure chamber
- 49: actuation pressure

- 50: control unit
- 51: pressure line
- 52: (first) determination and/or control line or bus
- 53: (second) determination and/or control line or bus

- 60: channel assembly
- 61: receiving/supplying section
- 61-1: (first) supply channel
- 61-2: (second) supply channel
- 61-3: (third) supply channel
- 62: distributing/discharging section
- 62-1: (first) discharge channel
- 62-2: (second) discharge channel
- 62-3: (third) discharge channel
- 63: common (microfluidic) connection channel
- 65: channel
- 67: support, carrier
- 67-1: first support portion
- 67-2: second support portion

- 70: interface and/or operation unit
- 71: operation portion
- 72: display portion

- 80: sensor assembly
- 81: supply side-sensor unit
- 81-1: (first) supply-side sensor
- 81-2: (second) supply-side sensor
- 81-3: (third) supply-side sensor
- 82: discharge-side sensor unit
- 82-1: (first) discharge-side sensor
- 82-2: (second) discharge-side sensor
- 82-3: (third) discharge-side sensor

## Claims

1. Liquid handling and/or distributing system (1) configured in order to control the supply of at least one liquid (2-1, 2-2, 2-3) into a plurality of assigned liquid targets (21, 22, 23),
- comprising a channel assembly (60) having an upstream receiving section (61), a downstream distributing section (62) and a single and common connection channel (63) fluidly connecting said receiving section (61) and said distributing section (62),
- wherein said receiving section (61) is configured in order to receive said at least one liquid (2-1, 2-2, 2-3) into said single and common connection channel (63),
- wherein said distributing section (62)
- comprises discharge channels (62-1, 62-2, 62-3) branching at their upstream end from said single and common connection channel (63), assigned in one-to-one correspondence to said liquid targets (21, 22, 23) and configured in order to be fluidly connected or connectable at their downstream end to an assigned liquid target (21, 22, 23),
- is configured in order to distribute said at least one liquid (2-1, 2-2, 2-3) from said single and common connection channel (63) into a liquid target (21, 22, 23) via a respective assigned discharge channel (62-1, 62-2, 62-3),
- comprising a discharge valve unit (42) having a respective discharge valve (42-1, 42-2, 42-3) located within a respective assigned discharge channel (62-1, 62-2, 62-3) for controllably and selectively opening and closing the passage of said respective assigned discharge channel (62-1, 62-2, 62-3).

2. Liquid handling and/or distributing system (1) according to claim 1,
which is configured for allowing washing or flushing said single and common connection channel (63).

3. Liquid handling and/or distributing system (1) according to claim 1 or 2,
- wherein said receiving section (61) comprises supply channels (61-1, 61-2, 61-3) joining at their downstream end into said connection channel (63), assigned in one-to-one correspondence to underlying liquid sources (11, 12, 13) and configured in order to be fluidly connected or connectable at their upstream end to an assigned liquid source (11, 12, 13) and is configured in order to receive said at least one liquid (2-1, 2-2, 2-3) from a respective liquid source (11, 12, 13) in a fluidly connected state, and/or
- comprising a supply valve unit (42) having a respective supply valve (41-1, 41-2, 41-3) located within a respective assigned supply channel (61-1, 61-2, 61-3) for controllably and selectively opening and closing the passage of said respective assigned supply channel (61-1, 61-2, 61-3).

4. Liquid handling and/or distributing system (1) according to any one of the preceding claims, comprising
- a liquid source assembly (10) having one or plural liquid sources (11, 12, 13) each of which being connected or configured to be connected or connectable to an assigned supply channel (61-1, 61-2, 61-3) of the receiving section (61) of the channel assembly (60) and/or
- a liquid target assembly (20) having plural liquid targets (21, 22, 23) each of which being connected or configured to be connected or connectable to an assigned discharge channel (62-1, 62-2, 62-3) of the distributing section (62) of the channel assembly (60).

5. Liquid handling and/or distributing system (1) according to any one of the preceding claims,
- comprising for a respective liquid source (11, 12, 13) an assigned liquid drive (31, 32, 33) and/or a coupling thereto,
- wherein the respective assigned liquid drive (31, 32, 33) is configured in order to controllably and selectively drive the supply of a respective liquid (2-1, 2-2, 2-3) from the assigned liquid source (11, 12, 13) or a respective potential of drive, in particular a pressure on the respective liquid (2-1, 2-2, 2-3),
- wherein a respective liquid drive (31, 32, 33) is preferably formed as a drive selected from the group which comprises a pneumatic drive, a hydraulic drive, a drive based on a stepper motor and a perfusor drive.

6. Liquid handling and/or distributing system (1) according to any one of the preceding claims,
- comprising a sensor assembly (80) or a coupling thereto which comprises at least one supply-side sensor (81-1, 81-2, 81-3) and/or at least one discharge-side sensor (82-1, 82-2, 82-3),
- wherein a respective supply-side and/or discharge-side sensor (81-1, 81-2, 81-3; 82-1, 82-2, 82-3) is configured in order to detect at least one of the presence or absence of a liquid (2-1, 2-2, 2-3), the presence or the absence of a flow of a liquid (2-1, 2-2, 2-3) and a value of the velocity of flow of a liquid (2-1, 2-2, 2-3), in particular in a respective assigned supply channel (61-1, 61-2, 61-3) or assigned discharge channel (62-1, 62-2, 62-3), and
- wherein in particular a supply-side sensor (81-1, 81-2, 81-3) is configured in order to be attached or to be attachable to an output region of an assigned liquid source (11, 12, 13) and/or to a respective assigned supply channel (61-1, 61-2, 61-3) and/or a discharge-side sensor (82-1, 82-2, 82-3) is configured in order to be attached or to be attachable to an input region of an assigned liquid target (21, 22, 23) and/or to a respective assigned discharge channel (62-1, 62-2, 62-3).

7. Liquid handling and/or distributing system (1) according to any one of the preceding claims, comprising
- a determination and/or control unit (50) and/or a connection (51) thereto configured in order to control an operation and/or a state of a respective liquid drive (31, 32, 33), a respective supply valve (41-1, 41-2, 41-3), a respective discharge valve (42-1, 42-2, 42-3), a respective supply-side sensor (81-1, 81-2, 81-3) and/or a respective discharge-side sensor (82-1, 82-2, 82-3) and/or
- an interface and/or operation unit (70) and/or a connection (52) thereto configured in order to receive and/or to generate operation information, in particular obtained or initiated from or by a user and/or by using a man-machine interface, for influencing and/or ruling the control of an operation and/or a state of a respective liquid drive (31, 32, 33), a respective supply valve (41-1, 41-2, 41-3), a respective discharge valve (42-1, 42-2, 42-3), a respective supply-side sensor (81-1, 81-2, 81-3) and/or a respective discharge-side sensor (82-1, 82-2, 82-3).

8. Liquid handling and/or distributing system (1) according to claim 7,
wherein said determination and/or control unit (50) and/or said respective connection (51) and/or said interface and/or operation unit (70) and/or said respective connection (52) are configured within or as a part of a mobile terminal device and/or for wired or wireless operation and/or data exchange.

9. Liquid handling and/or distributing system (1) according to any one of the preceding claims,
wherein a respective supply valve and/or discharge valve (41-1, 41-2, 41-3; 42-1, 42-2, 42-3) is formed as a membrane valve (45) comprising a flexible membrane (46) mounted on and/or within a support (47) and forming a closure of a pressure chamber (48) within said support (47) and in order to have in an unbiased and/or unpressurized rest state a first and in particular planar or curved configuration (46-1) for not obstructing the passage of an assigned supply channel and/or discharge channel (61-1, 61-2, 61-3; 62-1, 62-2, 62-3) and to have in a biased and/or pressurized activation state a second and in particular curved or planar configuration (46-2) obstructing the passage of the assigned supply channel and/or discharge channel (61-1, 61-2, 61-3; 62-1, 62-2, 62-3).

10. Liquid handling and/or distributing system (1) according to any one of the preceding claims,
wherein the entirety of supply valves (41-1, 41-2, 41-3) and/or the entirety of discharge valves (42-1, 42-2, 42-3) is formed as individual membrane valves (45) based on a single common and connected flexible membrane (46) or several individual membranes mounted on and/or within a single common support (47) and forming individual closures of individual pressure chambers (48) within said common support (47) and in order to have locally and individually in an unbiased and/or unpressurized rest state a first and in particular planar configuration (46-1) for not obstructing the passage of an assigned supply channel and/or discharge channel (61-1, 61-2, 61-3; 62-1, 62-2, 62-3) and to have locally and individually in a biased and/or pressurized activation state a second and in particular curved configuration (46-2) obstructing the passage of the assigned supply channel and/or discharge channel (61-1, 61-2, 61-3; 62-1, 62-2, 62-3).

11. Liquid handling and/or distributing system (1) according to any one of the preceding claims,
wherein the entirety of supply channels (61-1, 61-2, 61-3) and/or the entirety of discharge channels (62-1, 62-2, 62-3) are formed on or within a single and common support (67), in particular formed as a plate and/or as a block.

12. Liquid handling and/or distributing system (1) according to any one of the preceding claims,
wherein the entirety of channels supply and/or the entirety of discharge channels (61-1, 61-2, 61-3; 62-1, 62-2, 62-3) and the entirety of supply valves and/or the entirety of discharge valves (41-1, 41-2, 41-3; 42-1, 42-2, 42-3) are formed in and/or within a single and common support (47, 67), in particular formed as a plate and/or as a block.

13. Liquid handling and/or distributing system (1) according to any one of the preceding claims,
wherein at least a part of the liquid targets (21, 22, 23) is formed as an experimental site, in particular as a vessel for performing a biological or medical diagnostics experiment, in particular of a patch- or cell-clamp type, a drug response experiment, and/or cell transfection and/or cell labeling experiment, wherein a plurality of experimental sites is formed by liquid targets (21, 22, 23) and in particular formed on and/or within a common support or carrier, preferably in the form of a common multi-well and/or micro-fluidic chip or plate.

14. Liquid handling and/or distributing method, wherein a liquid handling and/or distributing system (1) according to any one of claims 1 to 13 is used.
